# EUROPEAN PATENT APPLICATION

(11) **EP 2 400 374 A1**
(43) Date of publication of application: **28.12.2011**
(21) Application number: 11155109.9
(22) Date of filing: 18.02.2011
(51) Int. Cl.: G06F 3/023, G06F 3/041, G06F 3/048

(54) **User input device, display apparatus comprising the same and control method thereof**

(30) Priority: 22.06.2010 KR 20100059092
(71) Applicant: SAMSUNG ELECTRONICS CO., LTD., Suwon-si Gyeonggi-do 442-742 (KR)
(72) Inventor: Choi, Eun-seok, Gyeonggi-do (KR); Noh, Chang-soo, Gyeonggi-do (KR); Choi, Sang-on, Gyeonggi-do (KR); Moon, Jong-bo, Gyeonggi-do (KR)
(74) Representative: Fearnside, Andrew Simon

(57) **Abstract**

Provided herein are a user input device, a display apparatus and a control method thereof. The user input device includes at least one touch sense pad (10) which is divided into a plurality of areas which are separated by a boundary (B); and at least one switch (20) to receive a user's input by pushing the touch sense pad.

## Description

### BACKGROUND

### Field

Apparatuses and methods consistent with the exemplary embodiments relate to a user input device, a display apparatus comprising the same and a control method thereof, and more particularly, to a user input device, a display apparatus comprising the same and a control method thereof which includes a tact switch.

### Description of the Related Art

A remote controller which controls a TV typically includes number and direction keys. A user controls a pointer to move or a channel to be selected through pushing a number button or a direction button.

Recently, a device which is equipped with a touch sensor such as a touch pad or touch screen is used and thus a user may more conveniently and quickly move the pointer or control graphic user interface (GUI) by using his/her finger or a pointing device. The touch-based device controls the GUI more intuitively and maximizes user experience.

### SUMMARY

An aspect of the present invention provides a user input device which may include: at least one touch sense pad which is divided into a plurality of areas which are separated by a boundary; and at least one switch to receive a user's input by pushing the touch sense pad.

The touch sense pad may include a key-shaped pad in which the boundary is depressible.

The key-shaped pad may have at least one of a QWERTY keypad and a numeric keypad printed thereon.

The touch sense pad may be provided in separate pairs.

The boundary may be visually displayed on the touch sense pad.

The touch sense pad may display thereon at least one of a QWERTY keypad and a numeric keypad.

The user input device may further include a signal transmitter; and a signal controller which controls the signal transmitter to output touch movement information to an external display apparatus upon a touch movement on the touch sense pad, and controls the signal transmitter to output to the display apparatus location information of the area which is pushed by the user.

The user input device may further include a signal transmitter; and a signal controller which controls the signal transmitter to output touch movement information to an external display apparatus upon a touch movement on the touch sense pad, and controls the signal transmitter to output to the display apparatus location information of the at least one of the QWERTY keypad and the numeric keypad which is pushed by the user.

The switch may be provided in a single unit.

The switch may be provided under the touch sense pad.

Another aspect of the present invention provides a display apparatus which may include: a display unit; a user interface (UI) generator which generates UI information to be displayed on the display unit; a user input unit which comprises at least one touch sense pad that is divided into a plurality of areas which are separated by a boundary, and at least one switch that receives a user's input by pushing the touch sense pad; and a controller which controls the UI generator to display on the display unit a character corresponding to location information of the area which is pushed by a user.

The touch sense pad may include a key-shaped pad in which the boundary is depressible.

The key-shaped pad may have at least one of a QWERTY keypad and a numeric keypad printed thereon.

The touch sense pad may be provided in separate pairs.

The boundary may be visually displayed on the touch sense pad.

The touch sense pad may display thereon at least one of a QWERTY keypad and a numeric keypad.

The controller may control the UI generator to display on the display unit a keypad if a character input mode is set, match a touch movement scope of the touch sense pad to a display scope of the keypad, move a pointer on the keypad corresponding to a touch movement on the touch sense pad, and control the UI generator to determine a character of the keypad corresponding to a location of the touch sense pad pushed by the user.

The controller may control the UI generator to input a character corresponding to a location of the QWERTY keypad or the numeric keypad which is pushed by the user if a character input mode is set.

The user input unit and the controller may communicate with each other over a network.

Another aspect of the present invention includes a control method of a display apparatus including a display unit and a user input unit comprising at least one touch sense pad divided into a plurality of areas which are separated by a boundary, and at least one switch receiving a user's input by pushing the touch sense pad, wherein the control method may include: detecting a location of an area among the plurality of areas which is pushed by the user; and displaying on the display unit a character corresponding to the detected location of the area.

The boundary of the areas may be depressible or visually displayed on the touch sense pad, and the method may further include: displaying a keypad on the display unit if a character input mode is set; matching a touch movement scope of the touch sense pad to a display scope of the keypad; and inputting a character of the keypad corresponding to the detected location of the areas.

The touch sense pad may have at least one of a QWERTY keypad and a numeric keypad, and the displaying of the character comprises displaying a character corresponding to a location of the QWERTY keypad or the numeric keypad which is pushed by the user.

The control method may further include: displaying a keypad on the display unit if a character input mode is set; matching a touch movement scope of the touch sense pad to a display scope of the keypad; and inputting a character of the keypad corresponding to the detected location of the areas.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a user input device according to an exemplary embodiment of the present invention;
FIG. 2 is a sectional view of the user input device taken along line I-I in FIG. 1;
FIG. 3 illustrates a touch sense pad which is included in the user input device according to the exemplary embodiment of the present invention;
FIG. 4 illustrates another touch sense pad which is included in the user input device according to the exemplary embodiment of the present invention;
FIG. 5 illustrates a user input device according to another exemplary embodiment of the present invention;
FIG. 6 is a schematic view of a display apparatus according to the exemplary embodiment of the present invention;
FIG. 7 is a control block diagram of the display apparatus according to the exemplary embodiment of the present invention;
FIG. 8 is a control flowchart of a user interface (UI) control method of the display apparatus according to the exemplary embodiment of the present invention;
FIG. 9 is a control flowchart of another user interface (UI) control method of the display apparatus according to the exemplary embodiment of the present invention;
FIG. 10 is a schematic view of a display apparatus according to another exemplary embodiment of the present invention;
FIG. 11 is a schematic view of a display apparatus according to another exemplary embodiment of the present invention;
FIG. 12 is a control flowchart of a user interface (UI) control method of the display apparatus in FIGS. 10 and 11; and
FIG. 13 is a schematic view of a display apparatus according to another exemplary embodiment of the present invention.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

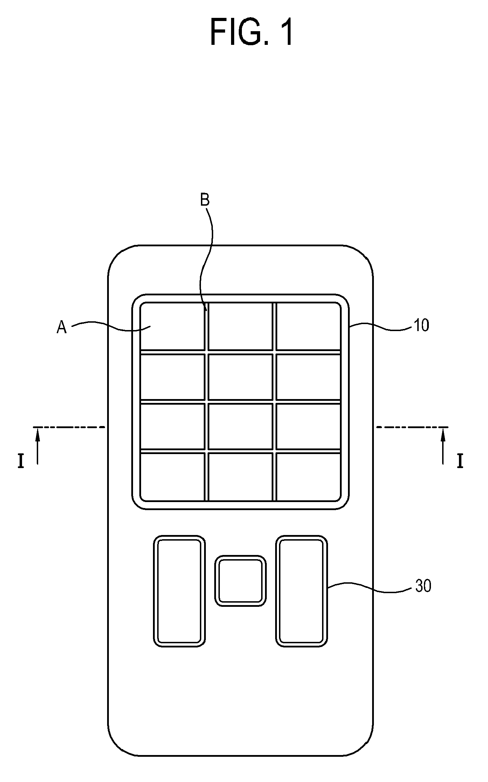

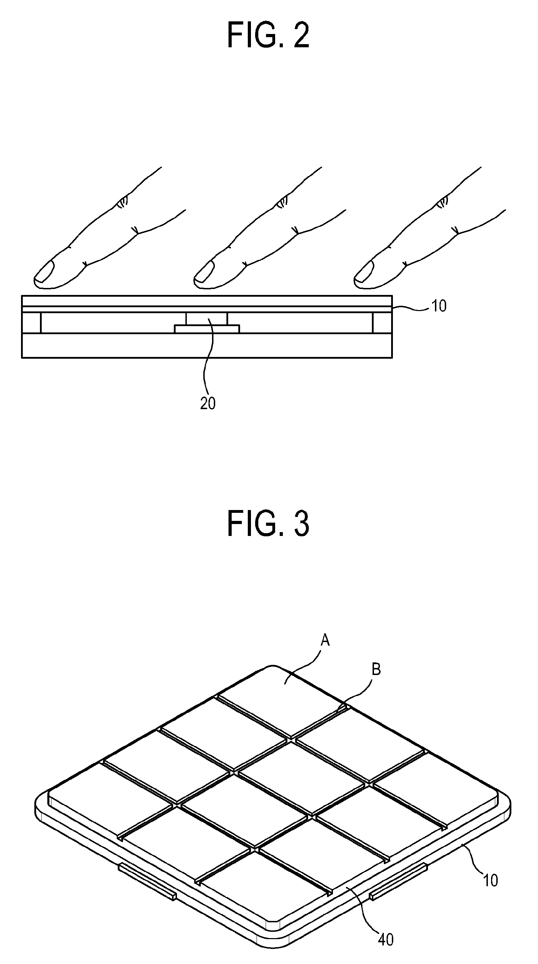

FIG. 1 illustrates a user input device according to an exemplary embodiment of the present invention. FIG. 2 is a sectional view of the user input device taken along line I-I in FIG. 1. As shown therein, the user input device includes a touch sense pad 10 which is divided into a plurality of areas A, and a button 30. A switch 20 is formed under the touch sense pad 10 to receive a user's input by a user pushing the touch sense pad 10. The user input device may include, but not limited to, a remote controller which controls a TV or other various AV devices. The user input device may include a dual TV which is being actively developed in recent years. That is, the user input device may include an auxiliary TV including a display unit and a touch pad to control a main TV or a mobile phone providing a remote control function if including a touch pad. The user input device according to the present exemplary embodiment preferably includes the small number of buttons 30 such as two through four buttons and a touch sense pad 10 instead of a plurality of buttons such as existing number and function buttons.

The touch sense pad 10 includes a pad to sense a touch by a part of a user's body or a pointing device. The touch sense pad 10 may include a touch screen on which graphic is displayed. The touch sense pad 10 is provided in a location where a user may efficiently touch the touch sense pad 10 when gripping the user input device with his/her one hand, and at least one pad may be provided. A user may make various manipulations with the touch sense pad 10, e.g., move, tap, click, double click, drag and drop, flick pages. The touch sense pad 10 is divided into a plurality of areas. A boundary B of the areas A may be visibly discernible by the user. For example, the boundary B may be displayed by a graphic for a user to recognize. Also a user may be felt by the user. For example, the boundary B maybe depressible by a user. Accordingly, the boundary B may be implemented as a protrusion or a groove so that the user may feel the boundary B.

The switch 20 is provided under the touch sense pad 10 and acts as a button to be pushed by a user. Upon pushing the switch 20, a user may select an option item selected by a user's touch. That is, a user's input by pushing the switch 20 has the effect of clicking or double clicking the touch sense pad 10. The switch 20 is provided on the same level as the touch sense pad 10 instead of being spaced therefrom, and a user may push the switch 20 more easily. A single switch 20 according to the present exemplary embodiment is provided under the touch sense pad 10. A part of a user's body or a pointing device may push any part of the touch sense pad 10.

Upon a user's input by pushing the switch 20, information of location of the area A which is being touched currently is recognized. The switch 20 is a button to receive a user's input by pushing it, and the information of the area A which is touched at the time of a user's pushing provides various methods to control an external device. For example, different functions such as increasing/decreasing channels or turning up/down the volume by area A may be assigned or various different controls may be performed according to the number of a user's pushing assigned to the area A.

According to another exemplary embodiment, a switch may be plurally provided. The switch may be provided under each area A or provided under the certain number of areas A. If the touch sense pad 10 is large in size, the switch may be plurally provided to more efficiently receive a user's input by pushing the switch 20.

FIG. 3 is a touch sense pad 10 which is included in the user input device. As shown therein, a key-shaped pad 40 is formed on the touch sense pad 10. The boundary B of the areas A is depressed from the touch sense pad 10. The key-shaped pad 40 includes a thin material to fully detect a touch of the touch sense pad 10, and contacts the touch sense pad 10. The key-shaped pad 40 has the areas A and the boundary B formed as a single body. A user may feel the boundary B of the areas A more easily by touching the key-shaped pad 40 and feel like he/she presses the key button when pushing the key-shaped pad 40. A user may efficiently control movement distance and speed with the depressed boundary B. If specific characters or symbols are assigned to each area A, a user may input characters or symbols through a touch-based touch sense pad 10.

The boundary B and the areas A of the key-shaped pad 40 may have different materials to be distinguished from each other. In this case, the boundary B needs not be depressed and a user may distinguish the areas A and the boundary B by feeling the different materials. Otherwise, an object such as a convex lens may be arranged on the areas A to distinguish the areas A and the boundary B.

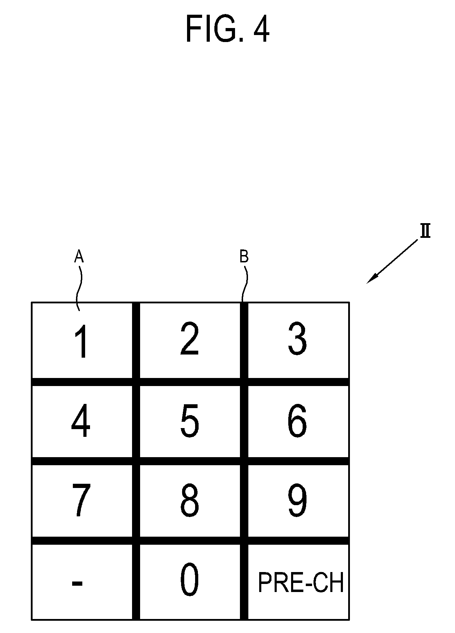

FIG. 4 illustrates another touch sense pad which is included in the user input device according to the exemplary embodiment of the present invention. The boundary B of the areas A according to the present exemplary embodiment is visually displayed on the touch sense pad 10. Also, a numeric keypad II is displayed on the areas A. The boundary B and numbers may be displayed by means of silk print. The user input device may further include an optical panel or an optical film to display the boundary B of the areas A. For example, the user input device may include a light guide film or an organic light emitting diode (OLED) panel and visually display the boundary B and the keypad II when necessary.

The touch sense pad 10 may display a QWERTY keypad or a Korean keypad as well as the numeric keypad II. Further, the touch sense pad 10 may display a direction key or a function key which is physically included in an existing remote controller.

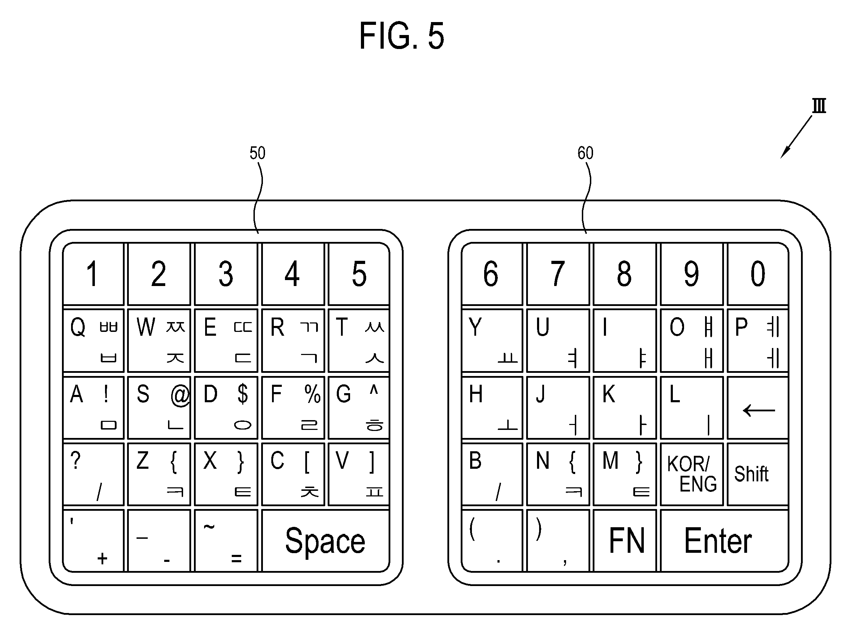

FIG. 5 is a user input device according to another exemplary embodiment of the present invention. As shown therein, the user input device includes two touch sense pads 50 and 60 spaced from each other, which display a QWERTY keypad III thereon. According to the spread of IP TVs, a user may receive various contents from the Internet and various external servers. A user increasingly inputs characters or symbols to control and execute contents. Particularly, there is a rising demand for inputting characters in TV, which is backed by revitalization of a social network service (SNS) and development of various applications.

The two touch sense pads 50 and 60 may be controlled by left had and right hand, respectively. Upon outputting the location information of the area A which is pushed by a user, there is an effect of inputting characters to an external device such as TV.

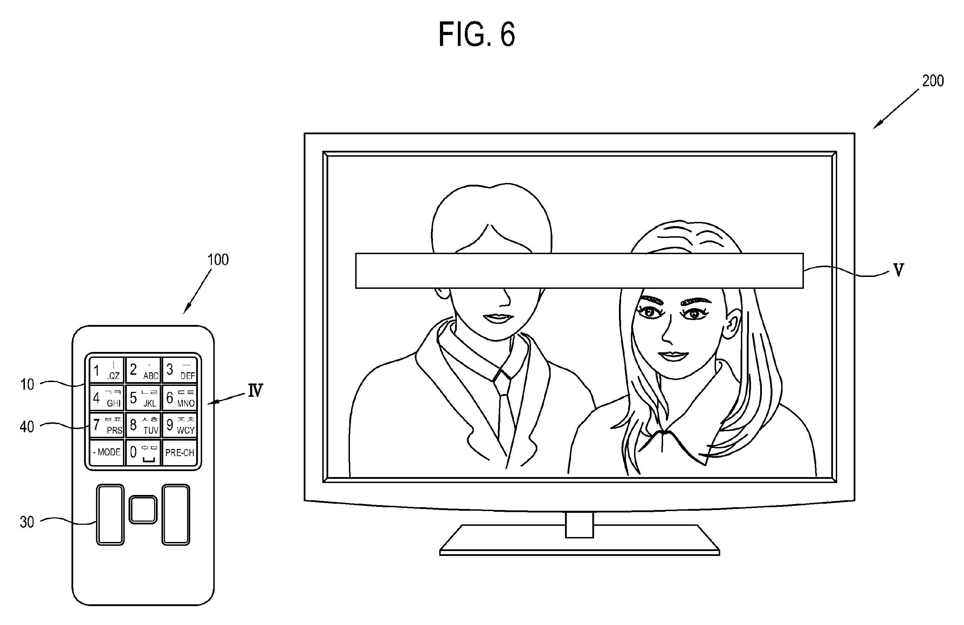

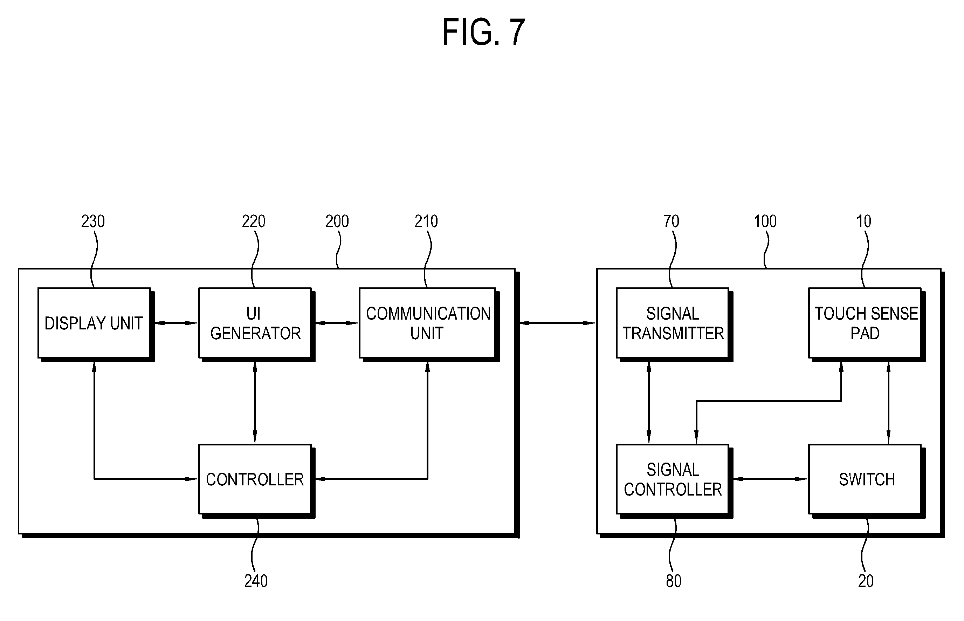

FIG. 6 is a schematic view of the display apparatus according to the exemplary embodiment of the present invention. FIG. 7 is a control block diagram of the display apparatus according to the present exemplary embodiment. As shown therein, the display apparatus includes a main body 200 including a display unit 230, and a user input unit 100 to control the foregoing. The user input unit 100 corresponds to the user input device according to the above exemplary embodiment. The main body 200 includes a communication unit 210 to communicate with the user input unit 100, a display unit 230, a user interface (UI) generator 220 and a controller 240 to control the foregoing elements. The user input unit 100 includes a touch sense pad 10, a switch 20, a signal transmitter 70 and a signal controller 80.

The communication unit 210 receives a signal from the user input unit 100 provided in a remote place, and outputs the signal to the controller 240. That is, the communication unit 210 and the controller 240 may communicate with each other over a network. The communication unit 210 may include a communication module to receive an infrared ray (IR) signal.

The UI generator 220 generates various UI information, and displays the UI on the display unit 230 for a user.

The display unit 230 may include a liquid crystal display (LCD) panel including a liquid crystal panel, an organic light emitting diode (OLED) panel including an organic light emitting layer, or a plasma display panel (PDP), and a panel driver (not shown) to drive the panels. The display unit 230 may display thereon a broadcasting signal, a still image such as a picture and various videos. The display unit 230 displays thereon UI information provided by the UI generator 220. The display unit 230 may display thereon icons of electronic program guide (EPG) corresponding to broadcasting program information, and contents and applications provided by a content provider.

A key-shaped pad 40 is provided on the touch sense pad 10 according to the present exemplary embodiment. The key-shaped pad 40 has a depressed boundary therein. As shown therein, the key-shaped pad 40 displays therein a keypad IV including numbers, alphabet and a "previous channel" key to select a previous channel. The keypad IV is shaped like a keypad as if that included in a mobile phone. If a user pushes "1" with his/her finger, location information of the touch sense pad 10 displaying "1" thereon is transmitted to the main body 200.

The signal transmitter 70 transmits to the communication unit 210 information of touch movement, information of location of the areas A and character information displayed in the keypad according to a control of the signal controller 80.

If a touch movement occurs from the touch sense pad 10, the signal controller 80 controls the signal transmitter 70 to output touch movement information to the communication unit 210, and to output location information of the keypad IV which is pushed upon a user's input by pushing the switch 20, to the communication unit 210.

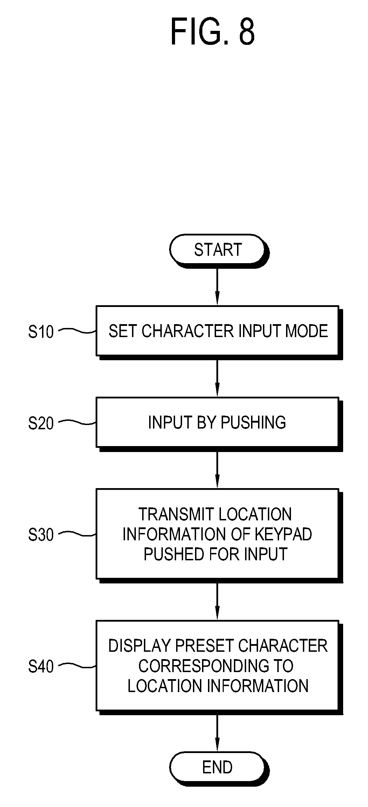

FIG. 8 is a control flowchart of a UI control method of the display apparatus according to the present exemplary embodiment. The UI control method using the user input unit 100 will be described with reference to FIG. 8.

If a character input mode is set by a user (S10), the display unit 230 displays thereon a character input bar V to input a character as in FIG. 6. The signal controller 80 outputs the touch movement information corresponding to a touch movement of the touch sense pad 10, and outputs the location information of the keypad which is pushed, to the communication unit 210 if the character input mode is set and the pointer is located in the character input bar V.

That is, upon a user's input by pushing the switch 20 (S20), the signal controller 80 determines the location where the push occurred and transmits to the main body 200 the location information of the keypad which is pushed (S30).

Upon receiving the location information of the keypad which is pushed, the controller 240 displays on the display unit 230 a preset character corresponding to the location information (S40). The controller 240 has character information of the location of the area A currently displayed on the touch sense pad 10. The controller 240 may determine which character is input by a user only with the location information of the touch sense pad 10 that is pushed, and displays the character on the display unit 230.

By using a simple user input unit 100 including the touch sense pad 10, the switch 20 provided under the touch sense pad 10 and the key-shaped pad 40 provided on the touch sense pad 10, a user may feel as if inputting a character through a button even though he/she actually uses a touch-based device. The user input unit 100 does not need any additional control module compared to the existing touch-based device since the user input unit 100 only recognizes the location information where the push occurs. That is, the display apparatus according to the present exemplary embodiment may provide a desired interface while not increasing manufacturing costs.

A user may execute various applications without the character input bar V by the UI generator 220. If the application is executed, a user may input an ID and a password to log in a particular Web site or may use a keypad displayed on the touch sense pad 10 to post a content on the SNS site.

If the character input mode is not set, a user may perform various touch operations on the touch sense pad 10 as if using a typical touch pad. Upon receiving a user's input by pushing, the controller 240 may recognize the number corresponding to the location information, and change channels or turn up/down the volume.

If an optical film which visually displays the boundary B of the areas A and keypads is used, instead of the key-shaped pad 40, the number of keypads displayed may be plural. In this case, the keypad may be selected by a user's option and the controller 240 may display a character corresponding to the selected keypad.

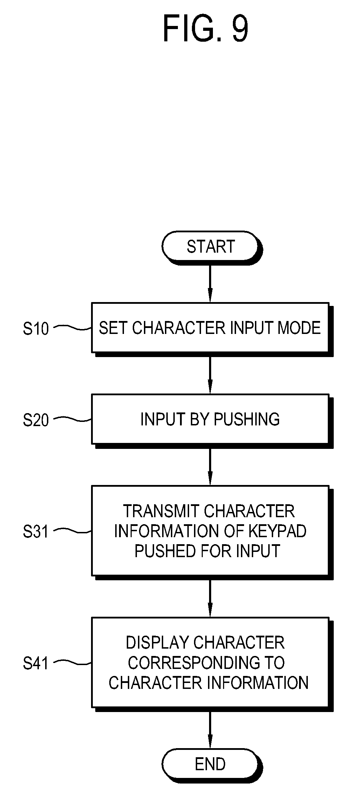

FIG. 9 is a control flowchart of another UI control method of the display apparatus. As shown therein, in the UI control method according to the present exemplary embodiment, if the character input mode is set as in FIG. 8 (S10), the character input bar V is displayed.

If a user pushes the keypad for an input (S20), the signal controller 80 determines which character is pushed, and transmits to the main body 200 character information of the keypad which is pushed (S31). The user input unit 100 may include a table which stores character information displayed in the keypad. For example, the signal controller 80 recognizes which character is displayed in which location, and may recognize whether 1 or 2 is input if a user pushes the keypad. The signal controller 80 may transmit to the controller 240 direct character information instead of location information of the keypad which is pushed.

Upon receiving the character information, the controller 240 displays on the display unit 230 the corresponding character based on the input character information (S41).

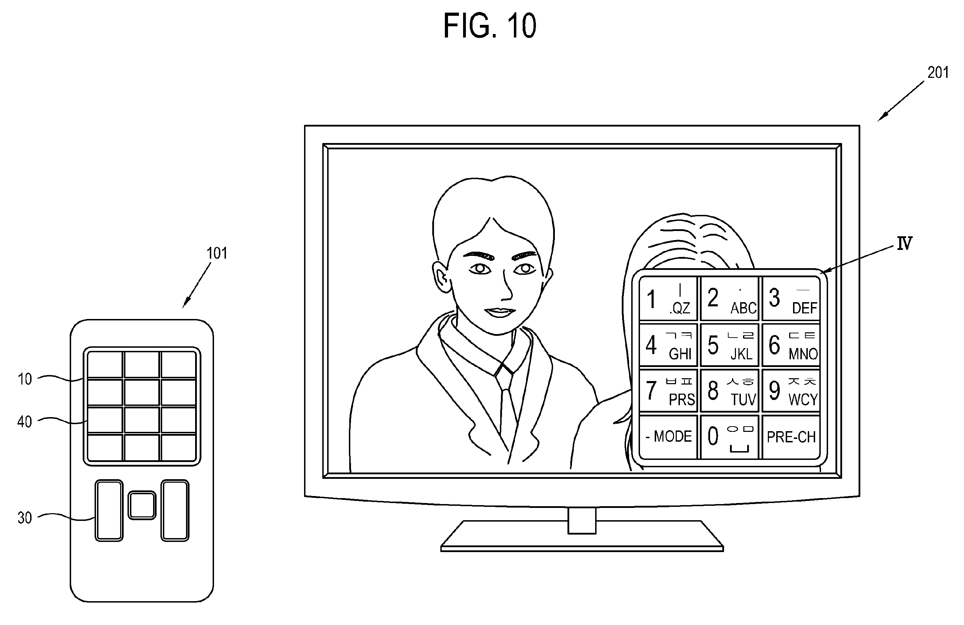

FIG. 10 is a schematic view of a display apparatus according to another exemplary embodiment of the present invention. The display apparatus includes a user input unit 101 which distinguishes areas A and a boundary B and does not display a keypad.

In this case, a keypad IV corresponding to the areas A of the user input unit 101 is displayed on the display unit 230. According to the present exemplary embodiment, the user input unit 101 preferably includes a keypad for a user to feel the boundary B of the areas A. Then, a user may easily input the character while looking at the keypad IV of the display unit 230.

If the character of the keypad IV displayed on the display unit 230 is input, the pointer is controlled to move only on the keypad IV corresponding to a user's touch of the touch sense pad 10. That is, the scope of the touch movement on the touch sense pad 10 directly matches a display scope of the keypad IV. The character input mode should be released for the pointer to get out of the display scope of the keypad IV.

If a finger on the touch sense pad 10 moves, the pointer of the keypad IV moves along with the movement. If a user pushes the touch sense pad 10, the character displayed in the pushed area is input.

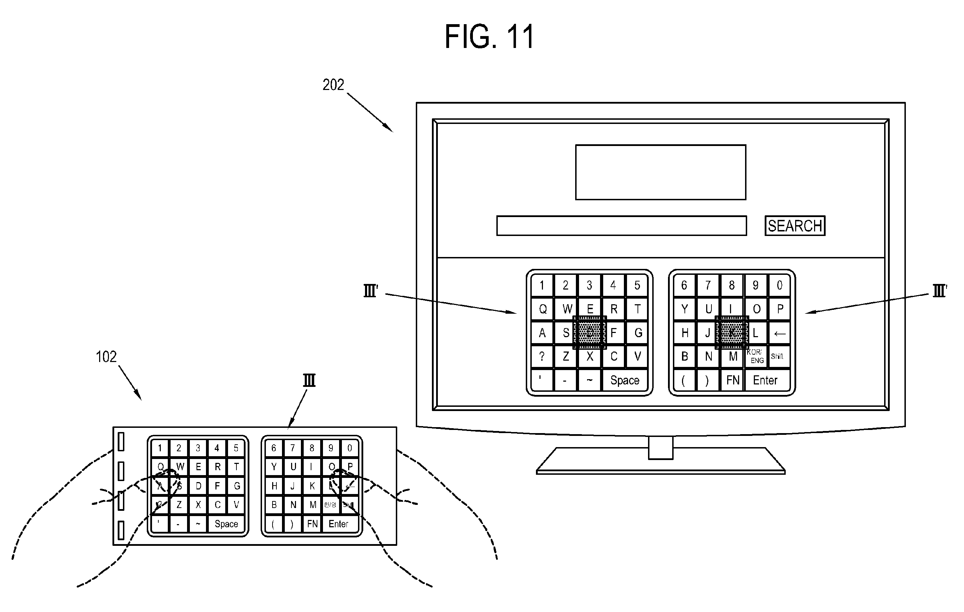

FIG. 11 is a schematic view of a display apparatus according to another exemplary embodiment. As shown therein, a QWERTY keypad III displayed on the touch sense pad 10 is equivalently displayed on a user input unit 102. According to the present exemplary embodiment, a user may input a character whiling looking at a QWERTY keypad III' of the display unit 230 or input a character by using the user input unit 102 only. In this case, the user input unit 102 preferably includes a key-shaped pad in which the boundary B of the areas A may be detected by a touch.

According to the present exemplary embodiment, all of a user's touches on the touch sense pad 10 is controlled to be performed only on the QWERTY keypad III' displayed on the display unit 230. If a finger moves on the touch sense pad 10, a pointer of the QWERTY keypad III' moves along with the movement. Upon receiving a user's input by pushing, a character which is displayed on the touched area is input.

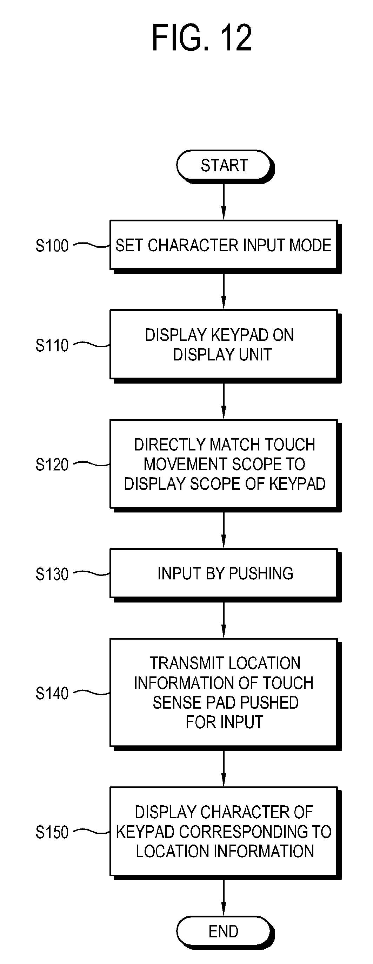

FIG. 12 is a control flowchart of a UI control method of the display apparatus in FIGS. 10 and 11. The UI control method will be described with reference to FIG. 12 when the keypad is displayed on the display unit 230.

If the character input mode is set (S100), the controller 240 displays on the display unit 230 a particular keypad such as the numeric keypad IV or the QWERTY keypad III' (S110).

The controller 240 directly matches the touch movement scope on the touch sense pad 10 to the display scope of the keypads III' and IV displayed on the display unit 230 (S120). If the direct matching is set, the pointer may move on the keypads III' and IV, and the location of the touch sense pad 10 matches the location of the keypads III' and IV.

Upon receiving a user's input by pushing (S130), the signal controller 80 determines which character is pushed, and transmits to the main body 200 the location information of the keypad which is pushed (S140).

Upon receiving the location information of the character, the controller 240 displays on the display unit 230 a character of the keypad corresponding to the input location information (S150).

The signal controller 80 may only transmit pushed input information about a user's input by pushing. A user should first touch a particular location to push it. If the touch sense pad 10 is touched, the pointer is located on the keypads III' and IV of the display unit 230. As the controller 240 is aware of the character information of the keypads III' and IV in which the pointer is located, it may display on the display unit 230 a character if recognizing the selected character.

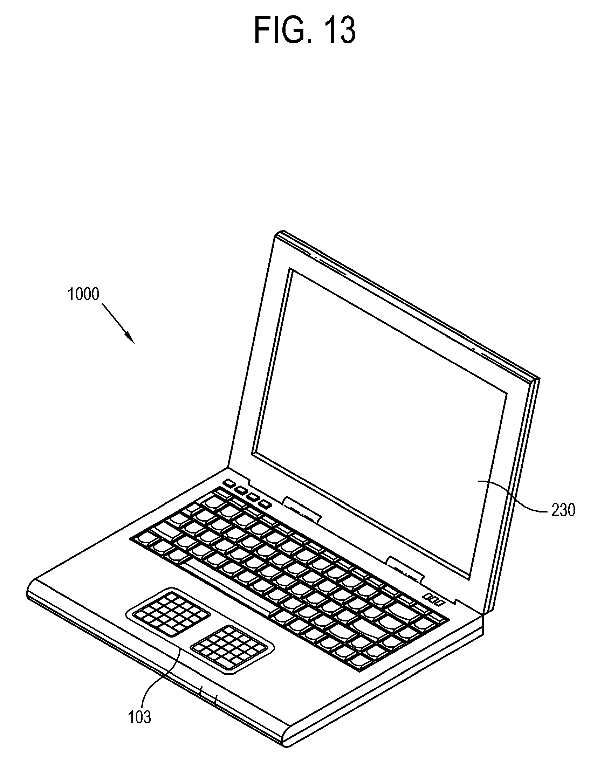

FIG. 13 is a schematic view of a display apparatus according to another exemplary embodiment of the present invention. The display apparatus 1000 includes a user input unit 103 which is provided in a device including a display unit 230 rather than a physically independent device. As shown therein, the display apparatus 1000 may include a mobile terminal such as a notebook computer, an ebook, or a netbook computer. According to another exemplary embodiment, the display apparatus may include a digital camera, an MP3 player, a tablet PC or a hand held product (HHP). The user input unit 103 according to an exemplary embodiment of the present invention may include all types of user input devices including a touch pad, without limitation to a remote controller as in FIG. 1. The UI control method according to a communication between the user input unit 103 and the controller controlling the UI generator is substantially the same as those according to the foregoing exemplary embodiments.

As described above, a user input device, a display apparatus comprising the same and a control method thereof according to an exemplary embodiment of the present invention enables a user to easily input a character by using a touch pad.

Also, a user input device, a display apparatus comprising the same and a control method thereof according to another exemplary embodiment of the present invention provides a keypad to input a character by using a single tact switch.

Further, a user input device, a display apparatus comprising the same and a control method thereof according to another exemplary embodiment of the present invention enables a user to easily input a character by using displayed UI information.

Although a few exemplary embodiments have been shown and described, it will be appreciated by those skilled in the art that changes may be made in these exemplary embodiments without departing from the scope of the invention as defined by the claims.

## Claims

1. A user input device comprising:
at least one touch sense pad (10) which is divided into a plurality of areas which are separated by a boundary (B); and
at least one switch (20) to receive a user's input by pushing the touch sense pad.

2. The user input device according to claim 1, wherein the touch sense pad comprises a key-shaped pad in which the boundary is depressible.

3. The user input device according to any preceding claim, wherein the touch sense pad is provided in separate pairs.

4. The user input device according to any preceding claim, wherein the boundary is visually displayed on the touch sense pad.

5. The user input device according to claims 2 to 4, further comprising a signal transmitter (70); and
a signal controller (80) which is arranged to control the signal transmitter to output touch movement information to an external display apparatus upon a touch movement on the touch sense pad, and to control the signal transmitter to output to the display apparatus location information of the area which is pushed by the user.

6. The user input device according to claims 2 to 4, wherein the key-shaped pad has at least one of a QWERTY keypad and a numeric keypad printed thereon,
the user input device further comprising a signal transmitter; and
a signal controller which is arranged to control the signal transmitter (70) to output touch movement information to an external display apparatus upon a touch movement on the touch sense pad, and to control the signal transmitter to output to the display apparatus location information of the at least one of the QWERTY keypad and the numeric keypad which is pushed by the user.

7. The user input device according to claims 2 to 4, wherein the key-shaped pad has at least one of a QWERTY keypad and a numeric keypad printed thereon,
the user input device further comprising a signal transmitter (70); and
a signal controller (80) which is arranged to control the signal transmitter to output touch movement information to an external display apparatus upon a touch movement on the touch sense pad, and to control the signal transmitter to output to the display apparatus character information of the at least one of the QWERTY keypad and the numeric keypad which is pushed by the user.

8. The user input device according to any preceding claim, wherein the switch is provided in a single unit.

9. The user input device according to any preceding claim, wherein the switch is provided under the touch sense pad.

10. A control method of a display apparatus which includes a display unit and a user input unit comprising at least one touch sense pad divided into a plurality of areas which are separated by a boundary, and at least one switch receiving a user's input by pushing the touch sense pad, the control method comprising:
detecting a location of an area among the plurality of areas which is pushed by the user; and
displaying on the display unit a character corresponding to the detected location of the area.

11. The control method according to claim 10, wherein the boundary of the areas is depressible or visually displayed on the touch sense pad, the method further comprising:
displaying a keypad on the display unit if a character input mode is set;
matching a touch movement scope of the touch sense pad to a display scope of the keypad;and
inputting a character of the keypad corresponding to the detected location of the areas.

12. The control method according to claim 11, wherein the touch sense pad has at least one of a QWERTY keypad and a numeric keypad, and the displaying of the character comprises displaying a character corresponding to a location of the QWERTY keypad or the numeric keypad which is pushed by the user.

13. The control method according to any of claims 10 to 12, wherein the touch sense pad has at least one of a QWERTY keypad and a numeric keypad, and the inputting the character comprises inputting a character corresponding to a location of the QWERTY keypad or the numeric keypad which is pushed by a user.

14. The control method according to any of claims 10 to 13, further comprising:
displaying a keypad on the display unit if a character input mode is set;
matching a touch movement scope of the touch sense pad to a display scope of the keypad; and
inputting a character of the keypad corresponding to the detected location of the areas.
